# EUROPÄISCHE PATENTANMELDUNG

(11) **EP 1 069 572 A1**
(43) Veröffentlichungstag der Anmeldung: **17.01.2001**
(21) Anmeldenummer: 00114352.8
(22) Anmeldetag: 05.07.2000
(51) Int. Cl.: G11B 33/04, G11B 23/023

(54) **Aufbewahrungseinrichtung für Datenträger**

(30) Priorität: 15.07.1999 DE 29912393 U; 27.08.1999 DE 29914989 U
(71) Anmelder: Deja GmbH, 51427 Bergisch Gladbach (DE)
(72) Erfinder: Deja-Borchard, Monika, 51491 Overath (DE)
(74) Vertreter: Langmaack, Jürgen, Dipl.-Ing.

(57) **Zusammenfassung**

Die Erfindung betrifft eine Aufbewahrungseinrichtung für Datenträger, insbesondere in Behältern abgelegten Compact-Discs, Magnetbändern oder dergl., mit Ablageflächen (5, 6), die durch Seitenwände (1, 2, 10) begrenzt sind und mit wenigstens einem, wenigstens ein elektrisches Leuchtmittel (18) aufweisenden Leuchtenelement (15), das im Bereich der raumseitigen Stirnkante (14) einer Seitenwand (1; 2) angeordnet ist.

## Beschreibung

Datenträger im weitesten Sinne, wie beispielsweise Compact-Discs, Magnetbänder oder dergl., werden üblicherweise in flachen Behältern aus Kunststoff, Karton oder dergl. zur Aufbewahrung und zum Schutz abgelegt. Die Behälter werden in Aufbewahrungseinrichtungen abgestellt, die übereinander und/oder nebeneinander angeordnete Ablagefächer aufweisen, die durch entsprechende Seitenwände begrenzt sind. Das Abstellen der Behälter kann hierbei sowohl in vertikaler als auch in horizontaler Ausrichtung erfolgen, wobei die Aufbewahrungseinrichtung die Form eines Regals, einer Box oder auch eines schmalen Ständers aufweisen kann. Die Behälter weisen in der Regel an wenigstens einer Schmalseite ein Schriftfeld auf, so daß bei den in der Aufbewahrungseinrichtung abgestellten Behältern eine Identifizierung wie bei einem Buch möglich ist.

Insbesondere bei der Verwendung derartiger Aufbewahrungseinrichtungen für Datenträger aus dem Phono- oder aus dem Videobereich erfolgt die Auswahl des jeweils abzuspielenden Datenträgers vielfach in einem nur spärlich beleuchteten Raum, so daß jeweils für die Auswahl die volle Raumbeleuchtung eingeschaltet werden muß.

Der Erfindung liegt nun die Aufgabe zugrunde, eine Aufbewahrungseinrichtung der vorstehend bezeichneten Art zu schaffen, durch die der geschilderte Nachteil in der Handhabung vermieden wird.

Diese Aufgabe wird gelöst durch eine Aufbewahrungseinrichtung für Datenträger mit Ablagefächern, die durch Seitenwände begrenzt sind und mit wenigstens einem, wenigstens ein elektrisches Leuchtmittel aufweisenden Leuchtenelement, das im Bereich der raumseitigen Stirnkante einer Seitenwand angeordnet ist. Durch ein derartiges, nur der Aufbewahrungseinrichtung selbst zugeordnetes Leuchtenelement ist es möglich, ausschließlich den Öffnungsbereich der Aufbewahrungseinrichtung zu beleuchten, so daß auch im abgedunkelten Raum der jeweils gewünschte Datenträger ausgewählt und aus der Aufbewahrungseinrichtung herausgenommen werden kann. Die Lichtstärke und/oder die Lichtfarbe des elektrischen Leuchtmittels kann hierbei so ausgewählt werden, daß die Schriftfelder auf den abgestellten Behältern nicht überstrahlt werden, sondern problemlos abgelesen werden können, andererseits zum Raum hin keine Blendwirkung auftritt.

Bei Aufbewahrungseinrichtungen mit horizontal ausgerichteten Ablagefächern, die in ihrer Breite der Breite eines Behälters zur Ablage einer Compact-Disc entsprechen reicht es aus, wenn nur an einer Seitenwand ein Leuchtenelement angeordnet ist. In Ausgestaltung der Erfindung ist es bei breiteren Aufbewahrungseinrichtungen zweckmäßig, insbesondere bei Aufbewahrungseinrichtungen, deren Ablagefächer durch eine oder mehrere vertikale Zwischenwände unterteilt sind, die jeweils für die Ablagefächer Seitenwände bilden, an jeder Seitenwand im Bereich der Stirnkante ein Leuchtenelement anzuordnet. Damit ist es möglich, die Ablagefächer, seien sie nun horizontal oder vertikal ausgerichtet, über die Breite der Aufbewahrungseinrichtung ausreichend zu beleuchten. In zweckmäßiger Ausgestaltung ist es hierbei ferner vorgesehen, daß sich das Leuchtenelement im wesentlichen über die Höhe der Seitenwand erstreckt.

In weiterer vorteilhafter Ausgestaltung der Erfindung ist vorgesehen, daß dem Leuchtmittel raumseitig eine lichtundurchlässige Abdeckung zugeordnet ist. Damit wird eine Blendung des Benutzers vermieden.

Die Abdeckung kann als Teil der Aufbewahrungseinrichtung ausgebildet sein, Zweckmäßig ist es jedoch, wenn die Abdeckung Teil des Leuchtenelementes ist, so daß sich hier eine einheitliche und ästhetische Gestaltung ergibt. Außerdem ergeben sich fertigungstechnische Vorteile in der Weise, daß der durch das Leuchtenelement gebildete "elektrische" Teil komplett vorgefertigt werden kann und anschließend vom Hersteller der Aufbewahrungseinrichtung montiert werden kann.

Zweckmäßig ist es hierbei ferner, wenn die Abdeckung als Träger für das Leuchtmittel ausgebildet ist.

Zweckmäßig ist es ferner, wenn das Leuchtmittel durch Niedervoltlampen gebildet wird, beispielsweise Niedervoltlampen bis maximal 12 Volt, um zum einen eine Gefährdung des Benutzers der bei kleinen Abmessungen leicht handhabbaren Aufbewahrungseinrichtungen auszuschließen und zum anderen neben einer Reduzierung des Verbrauchs an elektrischer Energie auch die Wärmeentwicklung so niedrig wie möglich zu halten. Zweckmäßig ist es hierbei, wenn auf einem stab- oder stegförmigen Träger mehrere Leuchtdioden mit Abstand nebeneinander angeordnet werden. Durch die Verwendung von Leuchtdioden mit unterschiedlichen Lichtfarben ist ferner die Möglichkeit gegeben, eine "sanfte" Lichtwirkung zu erreichen.

Die Erfindung wird anhand schematischer Zeichnungen eines Ausführungsbeispiels näher erläutert. Es zeigen:
- Fig. 1: eine Frontansicht einer regalartigen Aufbewahrungseinrichtung für Datenträger,
- Fig. 2: eine Seitenansicht der Aufbewahrungseinrichtung gem. fig. 1,
- Fig. 3: ein Schnitt gem. der Linie III-III in Fig. 2 durch ein Leuchtenelement in größerem Maßstab,
- Fig. 4: in einem schematischen Horizontalschnitt eine andere Ausführungsform für die Anordnung von Leuchtenelementen,
- Fig.5: eine regalförmige Aufbewahrungseinrichtung,
- Fig. 6: ein Profilquerschnitt in vergrößerter Darstellung.

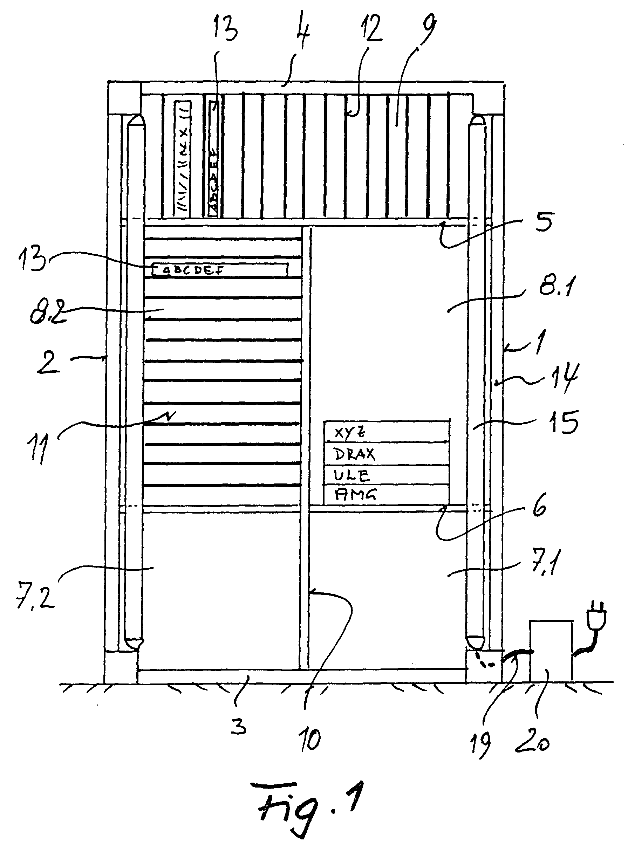

Die in Fig. 1 in einer Frontansicht dargestellte Aufbewahrunsgeinrichtung für Datenträger weist zwei äußere Seitenwände 1 und 2 auf, die über eine Bodenplatte 3 und eine Deckenplatte 4 sowie über eine hier nicht näher dargestellte Rückwand als kastenförmiges Gebilde fest miteinander verbunden sind.

Zwischen den beiden Seitenwänden 1 und 2 sind zwei Ablageflächen 5 und 6 angeordnet, die drei Ablagefächer 7, 8 und 9 bilden. Die Ablagefächer 7 und 8 sind bei dem dargestellten Ausführungsbeispiel durch eine durchgehende Mittelwand 10 unterteilt, die nach Art der Seitenwände 1 und 2 bei den Ablagefächern 7 und 8 den als Ablagefläche dienenden Boden 3 sowie die Ablagefläche 6 entsprechend begrenzen und hierbei Teilfächer 7.1 und 7.2 sowie 8.1 und 8.2 bilden.

Das Ablagefach 8.1 und das Ablagefach 8.2 ist mit horizontal ausgerichteten Teilern 11 und das Ablagefach 9 mit vertikal ausgerichteten Teilern 12 unterteilt, so daß ein definierter Einschub von Datenträgerbehältern 13, beispielsweise CD-Kassetten, möglich ist.

Mit Abstand vor den Stirnkanten 14 der beiden Seitenwände 1 und 2 (vergl. auch die Seitenansicht in Fig. 2) ist ein Leuchtenelement 15 angeordnet, das sich über die volle Höhe der beiden Seitenwände 1 und 2 erstreckt. Der Abstand des Leuchtenelementes 15 zur Stirnkante 14 der Seitenwände ist hierbei so bemessen, daß der Öffnungsbereich der Aufbewahrungseinrichtung hinreichend ausgeleuchtet ist.

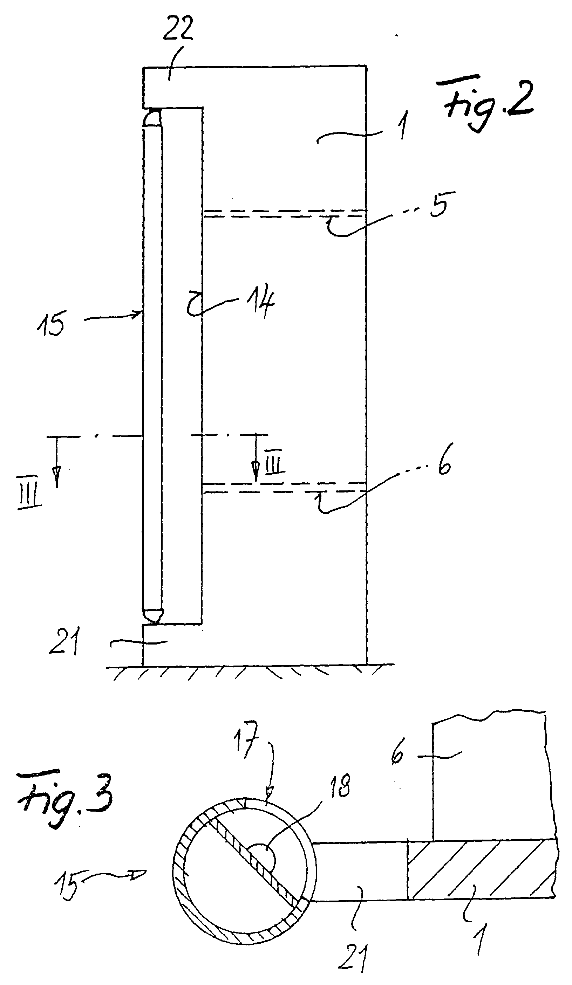

In Fig. 3 ist in größerem Maßstab ein Ausführungsbeispiel für ein Leuchtenelement 15 dargestellt, das im wesentlichen aus einem rohrförmigen Träger 16 besteht, der gleichzeitig eine Abdeckung zum Raum hin bildet und der auf seiner der Frontfläche der Aufbewahrungseinrichtung zugekehrten Seite als Lichtaustrittsöffnung einen durchgehenden Schlitz 17 oder auch eine Vielzahl von übereinander angeordneten begrenzten Lichtaustrittsöffnungen aufweist. In dem vom rohrförmigen Träger 16 umfaßten Raum ist ein elektrisches Leuchtmittel angeordnet. Das Leuchtmittel 18 kann aus einem oder mehreren übereinander angeordneten stabförmigen elektrischen Leuchtmitteln bestehen oder aber auch durch eine Vielzahl von im Abstand übereinander angeordneten Leuchtdioden bestehen. Die Verdrahtung des Leuchtmittels ist innerhalb des Trägers 16 angeordnet und zweckmäßigerweise jeweils im Bodenbereich herausgeführt und über eine zusammengefaßte Verbindungsleitung 19 mit einem Transformator 20 verbunden, der an die normale 220 Volt-Stromversorgung angeschlossen werden kann.

Bei breiteren Aufbewahrungseinrichtungen kann, wie in Fig. 1 angedeutet, die Anordnung von einer oder mehreren Zwischenwänden 10 zweckmäßig sein. In diesem Falle ist es zweckmäßig, wenn je nach Breite und je nach dem mit dem verwendeten Leuchtmittel erzielbaren Lichtkeil auch vor der Stirnkante einer derartigen Zwischenwand 10 wenigstens ein Leuchtenelement angeordnet ist, das sich in seiner Höhe dann je nach Gestaltung auch nur über die Höhe der betreffenden Zwischenwand erstreckt.

Wie Fig. 2 ferner erkennen läßt, ist das Leuchtenelement 15 über entsprechende Ansätze 21 und 22 an der jeweiligen Seitenwand mit seinen beiden Enden festgelegt, so daß sich für die Aufbewahrungseinrichtung eine kompakte und stabile Anordnung ergibt, die bei entsprechenden Abmessungen, beispielsweise in Form einer Box oder eines Ständers, leicht zu handhaben ist.

Bei der Verwendung von stabförmigen Leuchtmitteln, insbesondere aber Leuchtdioden oder in durchsichtigen Rohren angeordneten, sogenannten Lichterketten lassen sich somit Aufbewahrungseinrichtungen von praktisch beliebiger Höhe erstellen. Auch lassen sich mehrere Aufbewahrungseinrichtungen dieser Art mit geringerer Höhe übereinander mit gutem Gesamteindruck stapeln.

Das Leuchtenelement 15 kann auch um seine Längsachse drehbar befestigt sein, so daß ein Benutzer wahlweise den Lichtkegel auf die abgelegten Gegenstände richten kann oder aber auch das Leuchtenelement zum Raum hin strahlen lassen kann, um so einen besonderen Lichteffekt zu bewirken. Dies ist insbesondere dann vorteilhaft, wenn farbige Leuchtmittel, beispielsweise farbige Dioden oder Lichterketten verwendet werden.

In Fig. 4 ist in einem Horizontalschnitt eine andere Ausführungsform für ein Leuchtenelement dargestellt. Dieses besteht im wesentlichen aus einem als Winkelprofil ausgebildeten Träger 16.1, der mit der zugeordneten Seitenwand verbunden ist und der zur Raumseite hin ein lichtundurchlässige Abdeckung bildet. In dem vom Winkelprofil umschlossenen Innenraum ist wiederum ein elektrisches Leuchtmittel 18 so angeordnet, daß der der Frontfläche 23 zugekehrte Freiraum des Winkelprofils eine Lichtaustrittsöffnung bildet, die so gestaltet ist, daß der austretende Lichtkeil den gewünschten Bereich der Vorderfläche 23 überdeckt.

Je nach Wahl der elektrischen Leuchtmittel, insbesondere bei stab- oder röhrenförmigen Leuchtmitteln, kann es zweckmäßig sein, die Innenfläche der Abdeckung 16 zu verspiegeln, um so durch entsprechende Lichtlenkung zu einer höheren Lichtausbeute zu gelangen.

Zweckmäßig ist es, wenn das Leuchtmittel 18 über entsprechende Steckkontakte lösbar mit dem als Träger dienenden Leuchtenelement 15 auswechselbar verbunden ist, so daß ein beschädigtes, nicht funktionsfähiges Leuchtmittel in einfacher Weise ausgewechselt werden kann.

Der Öffnungsbereich kann verschließbar sein, beispielsweise durch ein sogenanntes Rollo.

In Fig. 5 ist eine abgewandelte Ausführungsform dargestellt. Diese Ausführungsform hat eher eine regalförmige Gestaltung, bei der die beiden Seitenwände 1 und 2 jeweils durch miteinander verbundene Profilstäbe 24 und 25 gebildet werden, die über eine Strebenkonstruktion oder über eine entsprechende Platte fest miteinander verbunden sind. Über Querstäbe 26 und 27, ggf. auch über eine entsprechende Deckenplatte und Bodenplatte sind die beiden Seitenwände 1 und 2 über ihre Profilstäbe 24 und 25 fest miteinander verbunden. Zwischen den beiden Seitenwänden 1 und 2 sind ferner horizontal ausgerichtete Teiler 11 in entsprechendem Abstand parallel zueinander befestigt, in die entsprechend Datenträgerbehälter, beispielsweise CD-Kassetten horizontal einschiebbar sind. Auch den Ablageflächen 5 bzw. 6 entsprechende Ablagemöglichkeiten können vorgesehen sein, die eine senkrechtstehende Ablage der Datenträgerbehälter ermöglichen.

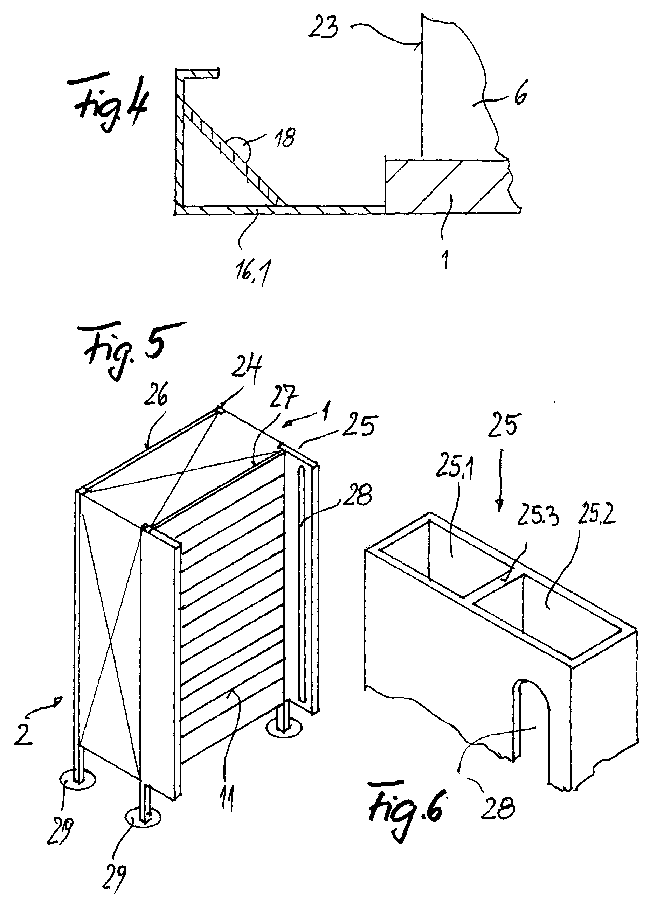

Die beiden vorderen Profilstäbe 25 begrenzen den Einschubbereich der Aufbewahrungseinrichtung. Die Profilestäbe 25 können als Hohlprofile ausgebildet sein und weisen einen langgestreckten Querschnitt auf, der zweckmäßigerweise noch durch eine Zwischenwand unterteilt ist, wie dies in Fig. 6 vergrößert dargestellt ist. Der dem Profilstab 24 zugekehrte Teil 25.1 des Profilstabs 25 bildet hierbei ein tragendes Element, über den die Verbindungen sowohl zu den hintenliegenden Profilstäben 24 als auch zur anderen Seitenwand geführt sind. Durch eine Zwischenwand 25.3 wird ein vorderer Bereich 25.2 abgeteilt, der auf seiner dem Öffnungsbereich zugekehrten Seite eine durchgehende schlitzförmige Öffnung 28 aufweist oder, entsprechend unterteilt, eine Folge von Öffnungen in Form von Rund- oder Langlöchern aufweist. In diesen vorderen Profilbereich 25.1 ist dann ein stabförmiges Leuchtmittel oder aber über ein Trägerelement eine Kette von einzelnen Leuchtmitteln eingesetzt, deren Licht durch die Öffnung 28 gegen den Öffnungsbereich auf die auf den Teilern 11 liegenden Datenträgerbehälter fallen kann. Die Aufbewahrungseinrichtung entsprechend Fig. 5 kann hierbei wiederum eine Bodenplatte aufweisen oder aber die Profilstäbe 24 und 25 sind mit entsprechenden Standfüßen 29 versehen. Durch diese Bauweise wird das Leuchtmittel in ein tragendes Element der Aufbewahrungseinrichtung integriert.

## Patentansprüche

1. Aufbewahrungseinrichtung für Datenträger, insbesondere in Behältern abgelegten Compact-Discs, Magnetbändern oder dergl., mit Ablageflächen (5, 6), die durch Seitenwände (1, 2, 10) begrenzt sind und mit wenigstens einem, wenigstens ein elektrisches Leuchtmittel (18) aufweisenden Leuchtenelement (15), das im Bereich der raumseitigen Stirnkante (14) einer Seitenwand (1; 2) angeordnet ist.

2. Aufbewahrungseinrichtung nach Anspruch 1, dadurch gekennzeichnet, daß an jeder Seitenwand (1, 2, 10) im Bereich der Stirnkante (14) ein Leuchtenelement (15) angeordnet ist.

3. Aufbewahrungseinrichtung nach Anspruch 1 oder 2, dadurch gekennzeichnet, daß sich das Leuchtenelement (15) im wesentlichen über die Höhe der Seitenwand (1, 2, 10) erstreckt.

4. Aufbewahrungseinrichtung nach einem der Ansprüche 1 bis 3, dadurch gekennzeichnet, daß dem Leuchtmittel (18) raumseitig eine lichtundurchlässige Abdeckung (16) zugeordnet ist.

5. Aufbewahrungseinrichtung nach einem der Ansprüche 1 bis 4, dadurch gekennzeichnet, daß die Abdeckung (16) Teil des Leuchtenelementes (15) ist.

6. Aufbewahrungseinrichtung nach einem der Ansprüche 1 bis 5, dadurch gekennzeichnet, daß die Abdeckung (16) als Träger für das Leuchtmittel (18) ausgebildet ist.

7. Aufbewahrungseinrichtung nach einem der Ansprüche 1 bis 6, dadurch gekennzeichnet, daß das Leuchtmitttel (18) durch eine Vielzahl nebeneinander angeordneter Niedervoltlampen gebildet wird.

8. Aufbewahrungseinrichtung nach einem der Ansprüche 1 bis 7, dadurch gekennzeichnet, daß das Leuchtenelement (15) mit seinen beiden Enden an der zugeordneten Seitenwand (1, 2) befestigt ist.

9. Aufbewahrungseinrichtung nach einem der Ansprüche 1 bis 8, dadurch gekennzeichnet, daß das Leuchtmittel (18) über Steckkontakte lösbar mit dem Träger verbunden ist.

10. Aufbewahrungseinrichtung nach einem der Ansprüche 1 bis 9, dadurch gekennzeichnet, daß das Leuchtenelement (15) um seine Längsachse drehbar gehalten ist.
